# EUROPEAN PATENT APPLICATION

(11) **EP 3 905 417 A1**
(43) Date of publication of application: **03.11.2021**
(21) Application number: 20749322.2
(22) Date of filing: 31.01.2020
(51) Int. Cl.: H01M 10/0583, H01M 10/04

(54) **METHOD FOR MANUFACTURING ELECTRODE ASSEMBLY, AND ELECTRODE AND SECONDARY BATTERY MANUFACTURED THEREBY**

(30) Priority: 01.02.2019 KR 20190013849
(71) Applicant: LG ENERGY SOLUTION, LTD., Seoul 07335 (KR)
(72) Inventor: PARK, Ki Beom, Daejeon 34122 (KR); YOO, Mi Jung, Daejeon 34122 (KR); LEE, Woo Yong, Daejeon 34122 (KR)
(74) Representative: Plasseraud IP
(86) International application number: PCT/KR2020/001520
(87) International publication number: WO 2020/159306

(57) **Abstract**

The present invention relates to a method for manufacturing an electrode assembly, an electrode manufactured therethrough, and a secondary battery. The method for manufacturing the electrode assembly according to the present invention comprises: a stacking process of alternately stacking a plurality of unit cells, each of which comprises an electrode and a separator, and a separator sheet, wherein the separator sheet is folded in a zigzag shape to locate the unit cells between the folded separator sheets, thereby forming zigzag-stacked electrode assembly; and a lamination process of heating and pressing both surfaces of the electrode assembly through a pair of heating presses to bond the plurality of unit cells and the separator sheet to each other, wherein, in the lamination process, each of the pair of heating presses are formed in a rounded shape to form the electrode assembly in a rounded shape when pressing the electrode assembly.

## Description

### CROSS-REFERENCE TO RELATED APPLICATION

The present application claims the benefit of the priority of Korean Patent Application No. 10-2019-0013849, filed on February 01, 2019, which is hereby incorporated by reference in its entirety.

### TECHNICAL FIELD

The present invention relates to a method for manufacturing an electrode assembly, an electrode assembly manufactured therethrough, and a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

When the electrode assembly is manufactured in a stacking method according to the related art, there has been a problem that it is difficult to manufacture the electrode assembly in a rounded shape. That is, since the electrode assembly according to the related art adheres between the electrode and the separator, it is difficult to manufacture the electrode assembly in the rounded shape when the electrode assembly is pressed.

- Prior Art Document: (Patent Document) Korean Patent Publication No. 10-2014-0015647

### DISCLOSURE OF THE INVENTION

### TECHNICAL PROBLEM

One aspect of the present invention is to provide a method for manufacturing an electrode assembly, which is capable of manufacturing the electrode assembly in a rounded shape, an electrode assembly manufactured therethrough, and a secondary battery.

### TECHNICAL SOLUTION

A method for manufacturing an electrode assembly according to an embodiment of the present invention comprises a stacking process of alternately stacking a plurality of unit cells, each of which comprises an electrode and a separator, and a separator sheet, wherein the separator sheet is folded in a zigzag shape to locate the unit cells between the folded separator sheets, thereby forming a zigzag-stacked electrode assembly and a lamination process of heating and pressing both surfaces of the electrode assembly through a pair of heating presses to bond the plurality of unit cells and the separator sheet to each other, wherein, in the lamination process, each of the pair of heating presses are formed in a rounded shape to form the electrode assembly in a rounded shape when pressing the electrode assembly.

In addition, an electrode assembly according to an embodiment of the present invention may be manufactured through the method for manufacturing the electrode assembly according to an embodiment of the present invention.

Furthermore, a secondary battery may comprise the electrode assembly manufactured through the method for manufacturing the electrode assembly according to an embodiment of the present invention.

### ADVANTAGEOUS EFFECTS

According to the present invention, the plurality of unit cells and the separator sheet may be alternately stacked. Here, the separator sheet may be folded in the zigzag shape, and the pressing and the heating may be performed through the pair of heating presses having the rounded pressing surface to bond the unit cells and the separator sheet to each other, thereby manufacturing the electrode assembly having the rounded shape.

In addition, since the unit cells and the separator sheet are bonded to each other in the rounded state through the lamination process without bonding the unit cells to the separator sheet in the stacking process, it may be easy to manufacture the electrode assembly having the rounded shape, and also, the rounded shape of the electrode assembly may be continuously maintained.

### BRIEF DESCRIPTION OF THE DRAWINGS

FIG. 1 is a front view illustrating a stacking process in a method for manufacturing an electrode assembly according to an embodiment of the present invention.
FIG. 2 is a front view illustrating the electrode assembly in which the stacking is performed through the stacking process of the method for manufacturing the electrode assembly according to an embodiment of the present invention.
FIG. 3 is a side view illustrating a state before the electrode assembly is pressed in a lamination process of the method for manufacturing the electrode assembly according to an embodiment of the present invention.
FIG. 4 is a side view illustrating a state in which the electrode assembly is pressed in the lamination process of the method for manufacturing the electrode assembly according to an embodiment of the present invention.
FIG. 5 is a perspective view of the electrode assembly manufactured through the method for manufacturing the electrode assembly according to an embodiment of the present invention.
FIG. 6 is a perspective view illustrating a state before the electrode assembly and a shape maintenance housing are coupled to each other in a shape maintenance process of the method for manufacturing the electrode assembly according to an embodiment of the present invention.
FIG. 7 is a perspective view illustrating a state in which the electrode assembly and the shape maintenance housing are coupled to each other in the shape maintenance process of the method for manufacturing the electrode assembly according to an embodiment of the present invention.
FIG. 8 is a side view illustrating a unit cell formation process in a method for manufacturing the electrode assembly according to another embodiment of the present invention.
FIG. 9 is a front view illustrating a stacking process in the method for manufacturing the electrode assembly according to another embodiment of the present invention.
FIG. 10 is a front view of the electrode assembly in which the stacking is performed through the stacking process in the method for manufacturing the electrode assembly according to another embodiment of the present invention.
FIG. 11 is a side view illustrating a lamination process in the method for manufacturing the electrode assembly according to another embodiment of the present invention.
FIG. 12 is a perspective view of the electrode assembly manufactured through the method for manufacturing the electrode assembly according to another embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

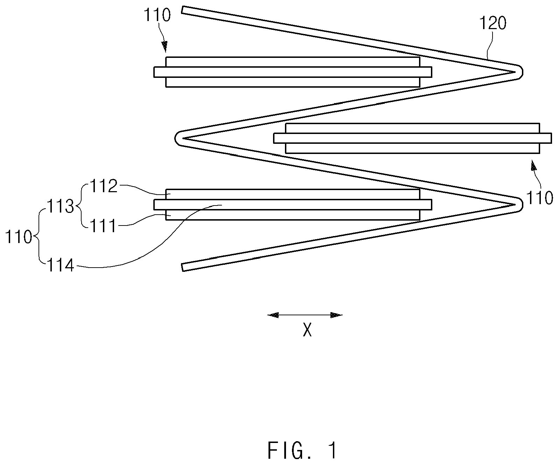

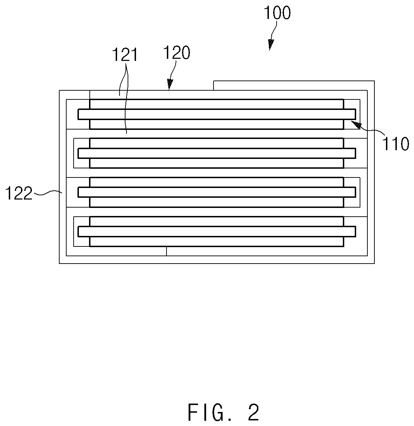

FIG. 1 is a front view illustrating a stacking process in a method for manufacturing an electrode assembly according to an embodiment of the present invention, and FIG. 2 is a front view illustrating the electrode assembly in which the stacking is performed through the stacking process of the method for manufacturing the electrode assembly according to an embodiment of the present invention.

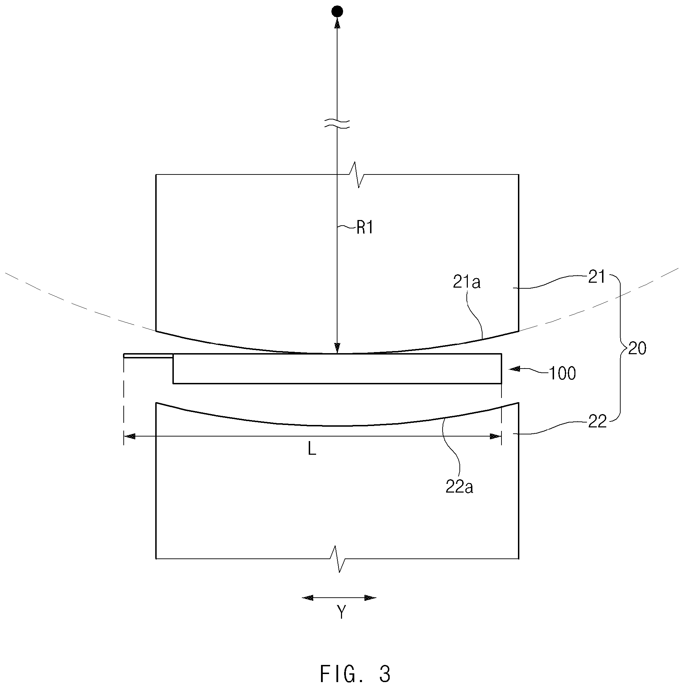

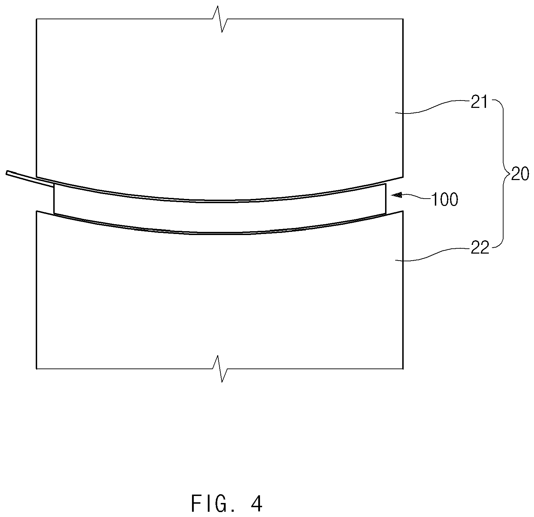

FIG. 3 is a side view illustrating a state before the electrode assembly is pressed in a lamination process of the method for manufacturing the electrode assembly according to an embodiment of the present invention, and FIG. 4 is a side view illustrating a state in which the electrode assembly is pressed in the lamination process of the method for manufacturing the electrode assembly according to an embodiment of the present invention.

Referring to FIGS. 1 to 4, a method for manufacturing an electrode assembly according to an embodiment of the present invention comprises a stacking process of folding a separator sheet 120 in a zigzag shape to locate unit cells 110 between the folded separator sheets 120, thereby forming an electrode assembly 100, and a lamination process of pressing the electrode assembly 100 while applying heat through a pair of heating presses to bond the unit cells 110 and the folded separator sheets 120 to each other, thereby forming the electrode assembly 100 in a rounded shape.

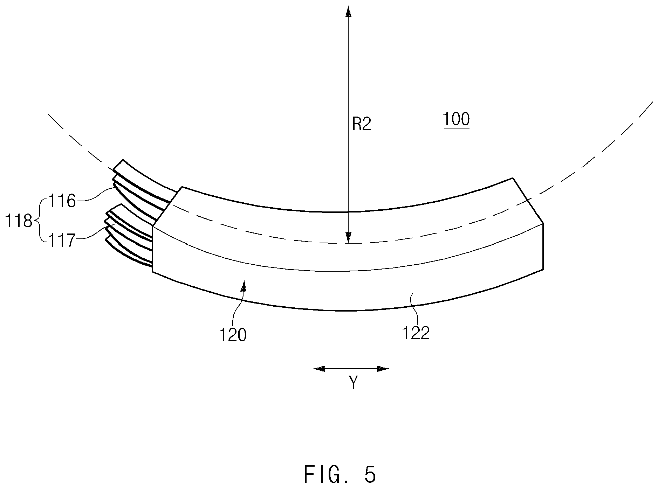

FIG. 5 is a perspective view of the electrode assembly manufactured through the method for manufacturing the electrode assembly according to an embodiment of the present invention.

Hereinafter, the method for manufacturing the electrode assembly 100 according to an embodiment of the present invention will be described in more detail with reference to FIGS. 1 to 5.

Referring to FIG. 1, in the stacking process, the plurality of unit cells 110 and the separator sheet 120 are alternately stacked. Here, the separator sheet 120 may be folded in the zigzag shape to locate the unit cells 110 between the folded separator sheets 120, thereby forming the zigzag-stacked electrode assembly 100.

In addition, in the stacking process, the separator sheet 120 may be alternately folded in a left and right direction X among four directions of the electrode assembly 100, and the unit cells 110 may be alternately stacked to left and right sides whenever the separator sheet 120 is folded.

Furthermore, in the stacking process, the separator sheet 120 and the unit cells 110 may be stacked without bonding to each other.

Referring to FIG. 2, in the stacking process, after the separator sheet 120 is folded in the zigzag shape, the unit cells 110 and the zigzag-folded portions of the separator sheet 120 may be further surrounded as a whole. Here, the separator sheet 120 may comprise a folded portion 121 that is folded in the zigzag shape and a winding portion 122 that surrounds the stack, in which the unit cells 110 and the folded portions of the separator sheet 120 are stacked, as a whole.

Also, referring to FIGS. 1 and 3, in the stacking process, for example, the electrode assembly 100 may be formed to have a length L of 10 mm to 120 mm. Here, in the stacking process, for example, the electrode assembly 100 may be formed to have length L of about 30 mm to 78 mm, but is limited to the above-described ranges in the length L of the electrode assembly 100 manufactured through the method for manufacturing the electrode assembly according to the present invention. Here, the length L of the electrode assembly 100 may be, for example, the total length of the electrode assembly 100 in a front and rear direction Y in a state before the electrode assembly 100 is formed in a founded shape.

Referring to FIGS. 1 and 5, each of the unit cells 110 may comprise an electrode 113 and a separator 114. Here, an electrode tab 118 may be formed on an end of the electrode 113.

The electrode 113 may comprise a positive electrode 111 and a negative electrode 112. Here, in the unit cell 110 may be provided as, for example, a mono cell having one side, at which the positive electrode 111 is disposed, and the other side, at which the negative electrode 112 is disposed, with the separator 114 between the one side and the other side.

The positive electrode 111 may comprise a positive electrode collector (not shown) and a positive electrode active material (not shown) applied to the positive electrode collector, and the negative electrode 112 may comprise a negative electrode collector (not shown) and a negative electrode active material (not shown) applied to the negative electrode collector.

For example, the positive electrode collector may be provided as foil made of an aluminum (Al) material.

The positive electrode active material may comprise lithium manganese oxide, lithium cobalt oxide, lithium nickel oxide, lithium iron phosphate, or a compound containing at least one of these and mixtures thereof.

For another example, the positive electrode active material may comprise a Hi Ni-based positive electrode material. Here, the Hi Ni-based positive electrode material may comprise one or more of a LiNiMnCoO-based material, a LiNiCoAl-based material, and a LiMiMnCoAl-based material.

For example, the negative electrode collector may be provided as foil made of a copper (Cu) or nickel (Ni) material.

For example, the negative electrode active material may be made of a material comprising synthetic graphite.

For another example, the negative electrode active material may comprise a lithium metal, a lithium alloy, carbon, petroleum coke, activated carbon, graphite, a silicon compound, a tin compound, a titanium compound, or an alloy thereof.

The separator 114 may be made of an insulating material to electrically insulate the positive electrode 111 and the negative electrode 112 from each other.

Here, the separator 114 may be, for example, a multilayer film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

The separator sheet 120 may be made of, for example, the same material as the separator sheet 114.

A positive electrode tab 116 may be further formed on an end of the positive electrode 111, and a negative electrode tab 117 may be further formed on an end of the negative electrode 112.

Referring to FIGS. 3 to 5, in the lamination process, both surfaces of the electrode assembly 100 may be heated and pressed through a pair of heating presses 20 so that the plurality of unit cells 110 and the separator sheet 120 are bonded to each other.

Also, in the lamination process, each of the pair of heating presses 20 may have a rounded shape. Thus, when the electrode assembly 100 is pressed, the electrode assembly 100 may be formed in a rounded shape.

Furthermore, in the lamination process, the electrode assembly 100 may be pressed to have a curvature in the front and rear direction Y among the four directions of the electrode assembly 100.

Here, in the lamination process, the electrode assembly 100 may be pressed by the pair of heating presses 20 so that the electrode assembly 100 has a curvature radius R1 of, for example, 60 mm to 450 mm. Particularly, in the lamination process, the electrode assembly 100 may be pressed by the pair of heating presses 20 so that the electrode assembly 100 has a curvature radius R1 of, for example, 90 mm to 200 mm. Thus, since the electrode assembly 100 is formed to have the curvature radius R1 of 90 mm or more, the electrode assembly 100 may be easily applied to a device having a rounded shape. In addition, since the electrode assembly 100 is formed to have the curvature radius R1 of 200 mm or less, a phenomenon in which the electrode assembly 100 is bent to be damaged or is cracked by external force may be prevented or significantly reduced.

The pair of heating presses 20 may comprise an upper press 21 that presses an upper portion of the electrode assembly 100 and a lower press 22 that presses a lower portion of the electrode assembly 100.

For example, the upper press 21 may have a pressing surface 21a with a convex shape, and the lower press 22 may have a pressing surface 22a with a concave shape. That is, when the stack of the unit cells 110 and the separator sheet 120 is disposed between the convexly rounded pressing surface 21a of the upper press 21 and the concavely rounded pressing surface 22a of the lower press 22 and then heated and pressed, the unit cells 110 and the separator sheet 120 may be bent to be bonded to each other, thereby forming the electrode assembly 100 having the rounded shape.

Here, each of the facing pressing surfaces 21a and 22a of the upper press 21 and the lower press 22 may have a curvature radius R1 of, for example, 60 mm to 450 mm.

Particularly, each of the facing pressing surfaces 21a and 22a of the upper press 21 and the lower press 22 may have a curvature radius R1 of, for example, 90 mm to 200 mm. Here, the curvature radius R1 may be a radius in a virtual circle formed to extend along a curve of each of the pressing surfaces 21a and 22a.

Referring to FIGS. 1, 4, and 5, in the method for manufacturing the electrode assembly according to an embodiment of the present invention, which is configured as described above, the separator sheet 120 and the unit cells 110 are stacked in the zigzag shape without being bonded to each other in the stacking process. Thus, when the separator sheet 120 and the unit cells 110 are pressed and heated to be bonded to each other in the following lamination process, it may be easy to be bonded in the rounded shape. That is, when the separator sheet 120 and the unit cells 110 are bonded to each other and then bent through the lamination process to form the electrode assembly 100 having the rounded shape, bonding force between the separator sheet 120 and the unit cells 110 may act as restoring force that intends to allow the electrode assembly 100 to return again to a flat shape. However, when the separator sheet 120 and the unit cells 110 are not bonded in the stacking process, but bent and bonded in the lamination process to form the rounded electrode assembly 100, the separator sheet 120 and the unit cells 110 may be bonded to each other in the bent state. Thus, the bonding force between the separator sheet 120 and the unit cells 110 may generate bending maintenance force by which the bent state is maintained. That is, when the separator sheet 120 and the unit cells 110 are bonded to each other in the rounded state in the lamination process, the electrode assembly 100 may be maintained in the bent and rounded state by the bonding force between the separator sheet 120 and the unit cells 110 (this means that the electrode assembly 100 in which the lamination process is completed is not spread again to be flat and is easy to be maintained in the rounded shape.

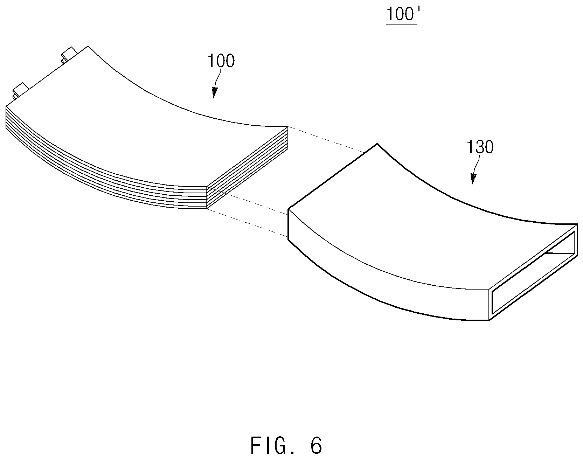

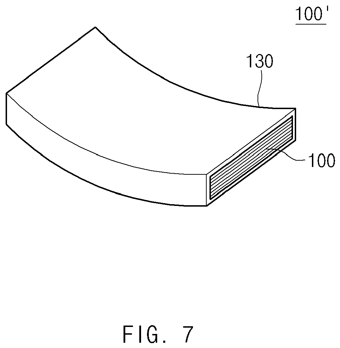

FIG. 6 is a perspective view illustrating a state before the electrode assembly and a shape maintenance housing are coupled to each other in a shape maintenance process of the method for manufacturing the electrode assembly according to an embodiment of the present invention, and FIG. 7 is a perspective view illustrating a state in which the electrode assembly and the shape maintenance housing are coupled to each other in the shape maintenance process of the method for manufacturing the electrode assembly according to an embodiment of the present invention.

The method for manufacturing the electrode assembly according to an embodiment of the present invention may further include a shape maintenance process of surrounding the electrode assembly 100 by using a shape maintenance housing 130 to maintain the rounded shape of the electrode assembly 100.

In the shape maintenance process, the electrode assembly 100 may be surrounded by the shape maintenance housing 130 so that the electrode assembly 100 formed through the lamination process is maintained in the rounded shape.

Here, the inside of the shape maintenance housing 130 may have a shape corresponding to the rounded shape of the electrode assembly 100.

Thus, it may be easy to containing maintain the rounded shape of the electrode assembly 100 by suppressing the electrode assembly 100 from returning from the rounded shape to the flat shape.

Here, when the electrode assembly is manufactured through the method for manufacturing the electrode assembly according to an embodiment of the present invention, for example, referring to FIG. 5, the electrode assembly 100 comprising the unit cells 110 and the separator sheet 120 may be formed. For another example, referring to FIG. 7, an electrode assembly 100' comprising the unit cells 110, the separator sheet 120, and the shape maintenance housing 130 may be formed.

Hereinafter, a method for manufacturing an electrode assembly according to another embodiment of the present invention will be described.

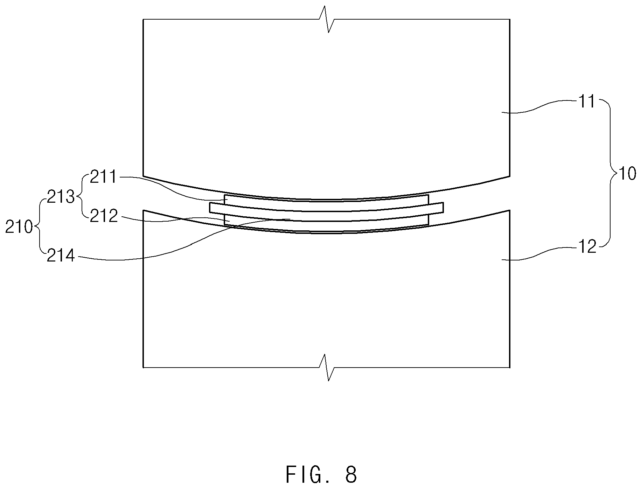

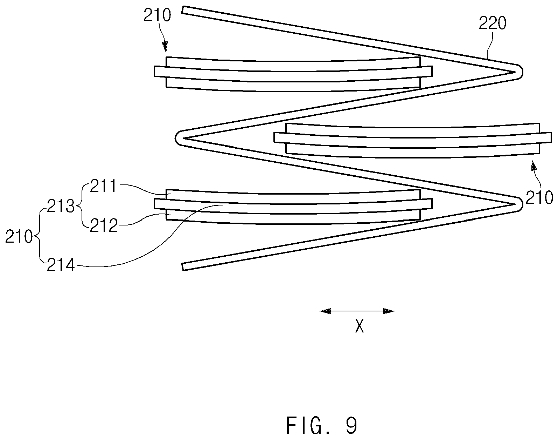

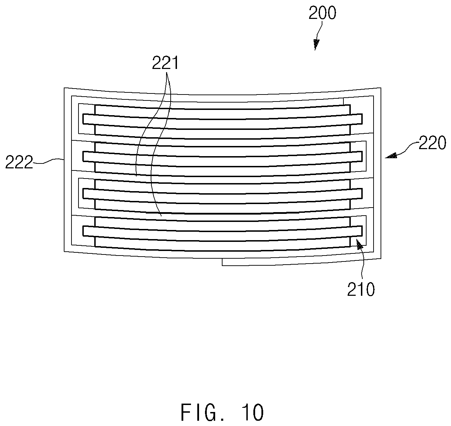

FIG. 8 is a side view illustrating a unit cell formation process in a method for manufacturing the electrode assembly according to another embodiment of the present invention, FIG. 9 is a front view illustrating a stacking process in the method for manufacturing the electrode assembly according to another embodiment of the present invention, and FIG. 10 is a front view of the electrode assembly in which the stacking is performed through the stacking process in the method for manufacturing the electrode assembly according to another embodiment of the present invention.

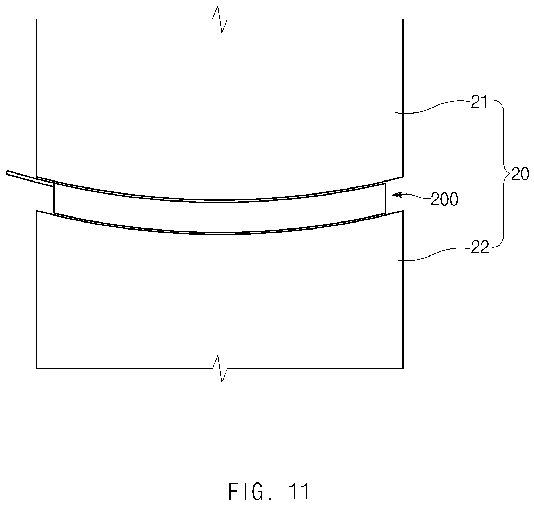

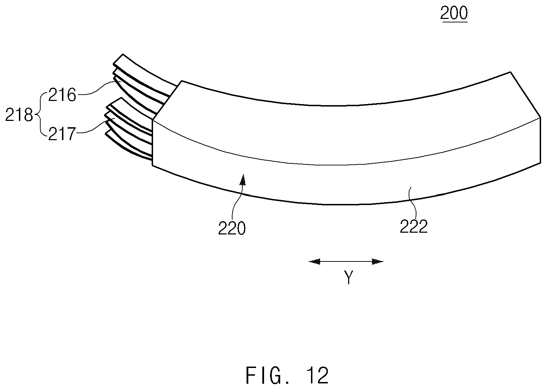

Also, FIG. 11 is a side view illustrating a lamination process in the method for manufacturing the electrode assembly according to another embodiment of the present invention, and FIG. 12 is a perspective view of the electrode assembly manufactured through the method for manufacturing the electrode assembly according to another embodiment of the present invention.

Referring to FIGS. 8 to 11, a method for manufacturing an electrode assembly according to another embodiment of the present invention comprises a unit cell formation process of forming unit cells 210 in a rounded shape, a stacking process of folding a separator sheet 220 in a zigzag shape to locate the unit cells 210 between the folded separator sheets 220, thereby forming an electrode assembly 200, and a lamination process of pressing the electrode assembly 200 while applying heat through a pair of heating presses to bond the unit cells 210 and the folded separator sheets 220 to each other, thereby forming the electrode assembly 200 in a rounded shape.

When the method for manufacturing the electrode assembly according to another embodiment of the present invention is compared to the method for manufacturing the electrode assembly according to the foregoing embodiment of the present invention, the unit cell formation process of forming the unit cells 210 in the rounded shape may be further performed.

Thus, contents of this embodiment, which are duplicated with those according to the forgoing embodiment, will be briefly described, and also, differences therebetween will be mainly described.

Referring to FIG. 8, in the method of manufacturing the electrode assembly according to another embodiment of the present invention, in the unit cell formation process, an electrode 213 and a separator 214 may be stacked and then heated and pressed so that the unit cells 210 are formed in a rounded shape.

In more detail, in the unit cell formation process, both surfaces of the electrode 213 and the separators 214 may be heated and pressed by a pair of heating presses 10 so as to be bonded to each other. Here, each of pressing surfaces of the pair of heating presses 10 constituted by an upper press 11 and a lower press 12 may be formed in a rounded shape to heat and press the electrode 213 and the separator 214, thereby forming a unit cell 210 having a rounded shape. Thus, it may be easier to form the electrode assembly 200 in a rounded shape.

Referring to FIG. 9, in a stacking process, the plurality of unit cells 210 and the separator sheet 220 are alternately stacked. Here, the separator sheet 220 may be folded in the zigzag shape to locate the unit cells 210 between the folded separator sheets 220, thereby forming the zigzag-stacked electrode assembly 200.

Here, in the stacking process, the separator sheet 220 may be in close contact with the unit cells 210 so as to correspond to the rounded shape of the unit cells 210 and then be folded in the zigzag shape.

In addition, in the stacking process, the separator sheet 220 may be alternately folded in a left and right direction X among four directions of the electrode assembly 200, and the unit cells 210 may be alternately stacked to left and right sides whenever the separator sheet 220 is folded.

Furthermore, in the stacking process, the separator sheet 220 and the unit cells 210 may be stacked without bonding to each other.

Referring to FIG. 10, in the stacking process, after the separator sheet 220 is folded in the zigzag shape, the unit cells 210 and the zigzag-folded portions of the separator sheet 220 may be further surrounded as a whole. Here, the separator sheet 220 may comprise a folded portion 221 that is folded in the zigzag shape and a winding portion 222 that surrounds the stack, in which the unit cells 210 and the folded portions of the separator sheet 220 are stacked, as a whole.

Referring to FIGS. 9 and 12, each of the unit cells 210 may comprise an electrode 213 and a separator 214. Here, an electrode tab 218 may be formed on an end of the electrode 213.

Here, the electrode 213 may comprise a positive electrode 211 and a negative electrode 212. Here, a positive electrode tab 216 may be further formed on an end of the positive electrode 211, and a negative electrode tab 217 may be further formed on an end of the negative electrode 212.

Here, in the unit cell 210 may be provided as a mono cell having one side, at which the positive electrode 211 is disposed, and the other side, at which the negative electrode 212 is disposed, with the separator 214 between the one side and the other side.

Referring to FIGS. 11 to 12, in the lamination process, both surfaces of the electrode assembly 200 may be heated and pressed through a pair of heating presses 20 so that the plurality of unit cells 210 and the separator sheet 220 are bonded to each other.

Also, in the lamination process, each of the pair of heating presses 20 may have a rounded shape. Thus, when the electrode assembly 200 is pressed, the electrode assembly 200 may be formed in a rounded shape.

Furthermore, in the lamination process, the electrode assembly 200 may be pressed to have a curvature in the front and rear direction Y among the four directions of the electrode assembly 200.

In the lamination process, the electrode assembly 200 may be pressed by the pair of heating presses 20 so that the electrode assembly 200 has a curvature radius of, for example, 60 mm to 450 mm.

Particularly, in the lamination process, the electrode assembly 200 may be pressed by the pair of heating presses 20 so that the electrode assembly 200 has a curvature radius of, for example, 90 mm to 200 mm.

Referring to FIGS. 8 to 12, in the method for manufacturing the electrode assembly according to another embodiment of the present invention, which is configured as described above, before the stacking process of stacking the unit cells 210 and the separator sheet 220, a unit cell formation process of stacking the electrode 213 and the separator 214 and then heating and pressing the electrode 213 and the separator 214 so that each of the unit cells 210 has a rounded shape may be performed first. Thereafter, after stacking the unit cells 210 and the separator sheet 220 in the stacking process, the unit cells 210 and the separator sheet 220 may be rounded in a lamination process to manufacture the electrode assembly 200.

Thus, after bonding layer between the electrode 213 and the separator 214 within each of the unit cells 210 is formed in the unit cell formation process, a rounded bonding layer may be formed again in the lamination process to more improve round maintenance force.

That is, when compared to the case in which the unit cells 210 and the separator sheet 220 are bonded to each other in the rounded shape to from the round bonding layers between the unit cells 210 and the separator sheet 220, the electrode 213 and the separator 214 within the unit cell 210 may be bonded to each other in the rounded shape to form the round bonding layer, and then, the unit cells 210 and the separator sheet 220 may be bonded to each other in the rounded shape to form the round bonding layers, thereby forming double round bonding layers so as to more improve round maintenance force of the electrode assembly 200.

Referring to FIGS. 5, 7, and 12, the electrode assemblies 100, 100', and 200 according to the embodiments of the present invention may be manufactured through the method for manufacturing the electrode assembly according to the foregoing embodiment of the present invention or the method for manufacturing the electrode assembly according to another embodiment of the present invention.

Referring to FIGS. 5, 7, and 12, the secondary batteries according to the embodiments of the present invention may comprise electrode assemblies 100, 100', and 200 manufactured through the method for manufacturing the electrode assembly according to the foregoing embodiment of the present invention or the method for manufacturing the electrode assembly according to another embodiment of the present invention. Here, the secondary batteries (not shown) may comprise electrode assemblies 100, 100', and 200 and battery cases (not shown) that accommodate the electrode assemblies 100, 100', and 200, respectively. Here, a specific structure of each of the secondary batteries is known in the art and detailed description will be omitted.

While the present invention has been particularly shown and described with reference to exemplary embodiments thereof, it is to be understood that the scope of the present invention is not limited to the method for the electrode assembly according to the present invention, the electrode manufactured therethrough, and the secondary battery. It will be understood by those of ordinary skill in the art that various changes in form and details may be made therein without departing from the spirit and scope of the present invention.

Furthermore, the scope of protection of the present invention will be clarified by the appended claims.

## Claims

1. A method for manufacturing an electrode assembly, the method comprising:
a stacking process of alternately stacking a plurality of unit cells, each of which comprises an electrode and a separator, and a separator sheet, wherein the separator sheet is folded in a zigzag shape to locate the unit cells between the folded separator sheets, thereby forming a zigzag-stacked electrode assembly ; and
a lamination process of heating and pressing both surfaces of the electrode assembly through a pair of heating presses to bond the plurality of unit cells and the separator sheet to each other,
wherein, in the lamination process, each of the pair of heating presses are formed in a rounded shape to form the electrode assembly in a rounded shape when pressing the electrode assembly.

2. The method of claim 1, wherein, in the stacking process, the separator sheet is alternately folded in a left and right direction among four directions of the electrode assembly, and
the unit cells are alternately stacked to left and right sides whenever the separator sheet is folded.

3. The method of claim 2, wherein, in the lamination process, the electrode assembly is pressed to have a curvature in a front and rear direction among the four directions of the electrode assembly.

4. The method of claim 3, wherein, in the stacking process, the electrode assembly is formed so that the electrode assembly has a length of 30 mm to 78 mm, and
in the lamination process, the electrode assembly is pressed through the pair of heating presses so that the electrode assembly has a curvature radius of 90 mm to 200 mm.

5. The method of claim 3, wherein the pair of heating presses comprise an upper press that presses an upper portion of the electrode assembly and a lower press that presses a lower portion of the electrode assembly, and
each of facing pressing surfaces of the upper press and the lower press has a curvature radius of 90 mm to 200 mm.

6. The method of claim 1, further comprising a shape maintenance process of surrounding the electrode assembly by using a shape maintenance housing so that the electrode assembly formed through the lamination process is maintained in the rounded shape.

7. The method of claim 6, wherein the inside of the shape maintenance housing has a shape corresponding to the rounded shape of the electrode assembly.

8. The method of claim 1, further comprising, before the stacking process, a unit cell formation process of stacking the electrode and the separator to heat and press the electrode and the separator so that each of the unit cells is formed in the rounded shape.

9. The method of claim 8, wherein, in the unit cell formation process, the unit cells are formed so that each of the unit cells has a curvature radius corresponding to a curvature radius of the electrode assembly to be formed through the lamination process.

10. The method of claim 9, wherein, in the stacking process, the separator sheet is in close contact with the unit cells to correspond to the rounded shape of each of the unit cells and is folded in the zigzag shape.

11. The method of any one of claims 1 to 10, wherein each of the unit cell is provided as a mono cell having one side, at which a positive electrode is disposed, and the other side, at which a negative electrode is disposed, with the separator between the one side and the other side.

12. The method of any one of claims 1 to 10, wherein, in the stacking process, the separator sheet and the unit cells are stacked without being bonded to each other.

13. An electrode assembly manufactured through the method of any one of claims 1 to 10.

14. A secondary battery comprising the electrode assembly manufactured through the method of any one of claims 1 to 10.
